# EUROPÄISCHE PATENTSCHRIFT

(11) **EP 3 023 709 B1**
(45) Veröffentlichungstag und Bekanntmachung des Hinweises auf die Patenterteilung: **08.05.2019**
(21) Anmeldenummer: 15184972.6
(22) Anmeldetag: 14.09.2015
(51) Int. Cl.: F24H 1/50, F24D 3/08, F24D 19/10, G05D 23/19

(54) **VERFAHREN ZUM ERWÄRMEN EINES FLUIDS IN EINEM SPEICHER IN EINER HEIZUNGSANLAGE UND HEIZUNGSANLAGE HIERZU**
METHOD FOR HEATING A FLUID IN A STORAGE DEVICE IN A HEATING SYSTEM AND HEATING SYSTEM FOR SAME
PROCEDE DE CHAUFFAGE D'UN FLUIDE DANS UN RESERVOIR DANS UNE INSTALLATION DE CHAUFFAGE ET INSTALLATION DE CHAUFFAGE ASSOCIEE

(30) Priorität: 18.11.2014 DE 102014223541
(43) Veröffentlichungstag der Anmeldung: 25.05.2016
(73) Patentinhaber: ROBERT BOSCH GMBH, 70442 Stuttgart (DE)
(72) Erfinder: Senn, Matthias, 73249 Wernau (DE)

(56) Entgegenhaltungen:
- DE-A1- 3 309 914
- DE-A1- 19 912 569

## Beschreibung

Die Erfindung betrifft ein Verfahren zum Erwärmen eines Fluids in einem Speicher, insbesondere von Brauchwasser, in einer Heizungsanlage, aufweisend mindestens eine Wärmequelle zum Übertragen von Wärmeenergie auf das Fluid. Die Erfindung betrifft weiter eine Heizungsanlage, welche mit diesem Verfahren betrieben wird.

### Stand der Technik

Heizungsanlagen dienen der Erwärmung von Wasser, beispielsweise von Brauch- und/oder Heizwasser. Viele Heizungsanlagen weisen hierfür ein Heizgerät und einen Wasserspeicher zum Speichern von warmem Wasser auf. Während der Versorgung des Wasserspeichers mit Wärme ist der Heizbetrieb nicht möglich, weshalb die Erwärmung des Wassers in diesem Fall mit maximaler Leistung erfolgt, damit möglichst wenig an Komfort eingebüßt werden muss.

Mit der DE 19912569 A1 ist ein Wärmeerzeuger bekannt geworden, mit einem modulierenden Gasbrenner, der Zeit- und speicherunabhängig mit variablen Wärmebelastungen betrieben werden kann. In einer weiteren Stufe kann zur Wirkungsgradoptimierung bei Aufladung des Speichers, in der Nacht der Brenner auf die Bedingungen der eingestellten Heizwasser- bzw. Warmwasser-Volumenströme eingestellt werden.

Es soll ein Verfahren zum optimierten Erwärmen eines Fluids vorgeschlagen werden, welches den Wirkungsgrad der Heizungsanlage erhöht, wobei der Komfort nicht reduziert werden soll.

### Offenbarung der Erfindung

Diese Aufgabe wird durch das erfindungsgemäße Verfahren zum Erwärmen eines Fluids in einem Speicher, insbesondere von Brauchwasser, in einer Heizungsanlage gemäß dem Hauptanspruch gelöst. Die Heizungsanlage weist mindestens eine Wärmequelle zum Übertragen von Wärmeenergie auf das Fluid sowie eine Regel- und/oder Steuereinheit auf. Das Verfahren zeichnet sich dadurch aus, dass das Fluid im Speicher mit maximaler Leistung erwärmt wird, falls der vom ersten Sensor gemessene erste Wert einen vorgebbaren ersten Schwellenwert unterschreitet, und dass anschließend das Fluid im Speicher mit reduzierter Leistung und/oder reduzierter Solltemperatur im effizienten Leistungsbereich erwärmt wird, falls der erste Wert am ersten Sensor den ersten Schwellenwert erreicht oder überschreitet, bis der erste Wert einen vorgebbaren Sollwert erreicht oder überschreitet.

Der Erfindung liegt die Erkenntnis zugrunde, dass es aus Komfortgründen notwendig erscheint, das Wasser im Speicher möglichst schnell zu erwärmen, um die Wärmequelle wieder für die Heizung zur Verfügung stellen zu können. In diesem Zustand arbeitet die Wärmequelle aber nicht immer optimal. Gerade bei modernen Häusern mit guter Isolierung kommt deshalb die Erfindung zum Tragen, wenn nämlich der Speicher nicht mit der maximal möglichen Leistung sondern in einem Bereich mit höherer Effizienz betrieben wird. Der vermeintliche Komfortverlust fällt geringer aus, jedoch verbessert sich die Umweltverträglichkeit der Heizungsanlage erheblich.

Unter einem Fluid wird ein gasförmiges oder flüssiges Wärmeträgermedium verstanden, das Wärme speichern und abgeben kann, wie Wasser oder Gase, insbesondere Brauchwasser bzw. Trinkwasser und Heizwasser.

Eine Wärmequelle ist definiert als eine Vorrichtung, welche Wärme erzeugt und abgibt. Insbesondere gibt die Wärmequelle Wärme an das Fluid ab, welches diese Wärme speichert und wiederum abgeben kann. Bei der Wärmequelle kann es sich um Brenner, Gas- oder Ölheizkessel, eine Wärmepumpe, eine Solaranlage und vieles mehr handeln.

Ein Speicher dient zum Speichern des Fluids, insbesondere des erwärmten Fluids. Beispielsweise kann es sich bei dem Speicher um einen Schichtladespeicher, einen Speicher mit Brauchwasser, eine Frischwasserstation, einen Bereitschaftsteil in einem Pufferspeicher, einen Pufferspeicher zur Erwärmung von Brauchwasser und vieles mehr handeln.

Durch die in den Unteransprüchen aufgeführten Merkmale sind vorteilhafte Weiterbildungen des erfindungsgemäßen Verfahrens zum Erwärmen eines Fluids in einem Speicher nach dem Hauptanspruch möglich.

Hierfür ist es vorteilhaft, wenn im Speicher ein erster Sensor, insbesondere ein Temperatursensor, angeordnet ist, dessen Signal zur Initiierung der reduzierten Leistung und/oder der reduzierten Solltemperatur herangezogen werden kann.

In einem Schritt des Verfahrens kann von dem Sensor ein Wert gemessen werden, insbesondere ein Temperaturwert, welcher mit einem vorgebbaren Sollwert, insbesondere einer Sollwerttemperatur, verglichen werden kann. Dabei ist es von Vorteil, wenn die Wärmequelle mit reduzierter Leistung betrieben wird, wenn der gemessene Wert des Sensors den Sollwert unterschreitet, statt einer maximalen Leistung, da dies die Effizienz der Wärmequelle erhöht. Dabei kann die Wärmequelle derart betrieben werden, dass kein Komfort eingebüßt werden muss.

Komfort und Effizienz werden weiter erhöht, wenn das Fluid im Speicher zunächst mit maximaler Leistung erwärmt werden kann, falls der vom ersten Sensor gemessene Wert den Schwellenwert unterschreitet. Falls der Wert am ersten Sensor den Schwellenwert erreicht oder überschreitet, kann das Fluid im effizienten Leistungsbereich erwärmt werden, bis der Wert den Sollwert erreicht oder überschreitet. Diese Vorgehensweise bringt Effizienz und Komfort in ein ausgeglichenes Verhältnis. Beispielsweise kann das Brauchwasser zur Zapfung beim Duschen dienen. Falls die Wassertemperatur auf einen bestimmbaren Wert abfällt, welcher beispielsweise nicht mehr als angenehm empfunden wird, sollte die Wassertemperatur aus Komfortgründen möglichst schnell erhöht werden. Sobald der Schwellenwert aber wieder erreicht ist, genügt eine Erwärmung im effizienten Bereich.

Zur Bestimmung der reduzierten Leistung und/oder der reduzierten Solltemperatur der Wärmequelle können vorgebbare Voreinstellungen, Komforteinstellungen und/oder Prioritätseinstellungen herangezogen werden. Dies gewährleistet zum einen die Einhaltung eines hohen Komfortstandards, wobei zum anderen die Erhöhung der Effizienz umgesetzt wird.

Das Verfahren lässt sich auch für Speicher mit mehreren Sensoren anwenden. So kann der Speicher mindestens einen zweiten Sensor, insbesondere einen Temperatursensor, aufweisen, welcher unterhalb des ersten Sensors angeordnet ist. Dieser zweite Sensor kann zur Bestimmung der reduzierten Leistung für die Wärmequelle herangezogen werden, um einen möglichst hohen Wirkungsgrad zu erzielen.

Dabei ist es von Vorteil, wenn das Fluid im Speicher im effizienten Leistungsbereich erwärmt werden kann, falls ein vom zweiten Sensor gemessener Wert den Sollwert für das Fluid im Speicher unterschreitet.

Zur Erhöhung des Komforts bei hohem Wirkungsgrad der Heizungsanlage kann die folgende Vorgehensweise innerhalb des Verfahrens von Vorteil sein. Falls der Wert am ersten Sensor den Sollwert unterschreitet, wird die Wärmequelle mit maximaler Leistung betrieben. Sobald der Wert am ersten Sensor den Sollwert wieder erreicht oder überschreitet und/oder der Wert am zweiten Sensor einen vorgebbaren Schwellenwert erreicht oder überschreitet, wird die Wärmequelle im effizienten Leistungsbereich betrieben, bis der Wert am zweiten Sensor den Sollwert erreicht oder überschreitet.

Der Schwellenwert kann gemäß der Formel Tsoll - dT*f berechnet werden, wobei Tₛₒₗₗ der Sollwert, dT ein vorgebbarer Hysteresewert und f ein vorgebbarer Komfortfaktor ist, der zwischen 0 und 1 liegt.

Bei dem Fluid kann es sich um Brauchwasser und/oder Heizwasser handeln. Dabei dient die Wärmequelle der Erwärmung von Brauch- und/oder Heizwasser. Dabei wird von dem erwärmten Heizwasser Wärme auf das Brauchwasser im Speicher übertragen. Zur Erhöhung des Komforts und des Wirkungsgrads der Anlage ist es von Vorteil, wenn die Wärmequelle mit reduzierter Leistung und/oder reduzierter Solltemperatur betrieben wird, wenn keine oder geringe Heizwasseranforderungen für den Heizbetrieb vorliegen.

Die Erfindung betrifft auch eine Heizungsanlage, aufweisend mindestens eine Wärmequelle zum Erwärmen eines Fluids und mindestens einen Speicher zum Speichern des Fluids, sowie eine Regel- und/oder Steuereinheit, die konfiguriert ist, in der Heizanlage das Verfahren zum Erwärmen des Fluids im Speicher auszuführen.

### Zeichnung

In den Figuren sind schematische Darstellungen erfindungsgemäßer Heizungsanlagen zu sehen. Weiter sind Abläufe des erfindungsgemäßen Verfahrens zum Erwärmen eines Fluids in einem Speicher in der Heizungsanlage gezeigt, welches in der folgenden Beschreibung näher erläutert wird. Es zeigen
- Figur 1: ein erstes Ausführungsbeispiel einer erfindungsgemäßen Heizungsanlage,
- Figur 2: ein zweites Ausführungsbeispiel einer erfindungsgemäßen Heizungsanlage,
- Figur 3: die prinzipiellen Schritte des Verfahrens zum Erwärmen und/oder Speichern eines Fluids in der Heizungsanlage,
- Figur 4: ein Diagramm zur Veranschaulichung eines ersten erfindungsgemäßen Verfahrens,
- Figur 5: ein Diagramm zur Veranschaulichung eines zweiten erfindungsgemäßen Verfahrens.

### Beschreibung der Zeichnungen

In den Figuren sind gleichen Bauteilen gleiche Bezugszeichen zugeordnet.

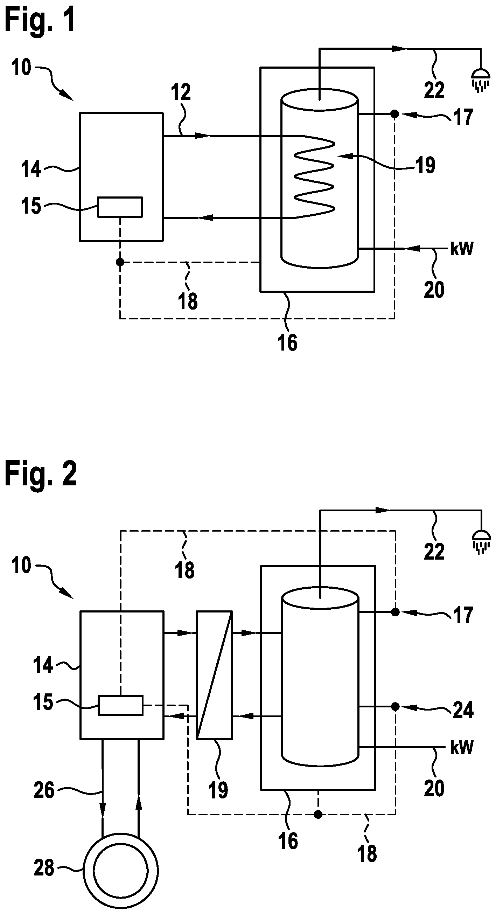

Figur 1 zeigt ein erstes Ausführungsbeispiel einer erfindungsgemäßen Heizungsanlage 10 zur Erwärmung eines Fluids in einem Speicher 16. Hierbei handelt es sich um Brauchwasser, das durch Heizwasser durch Übertragung von Wärme erwärmt wird.

Die Heizungsanlage 10 weist einen Heizkreis 12 zur Zirkulierung von Heizwasser, eine Wärmequelle 14 zum Erwärmen des Heizwassers und einen Speicher 16 zum Speichern von Brauchwasser auf. Am oberen Teil des Speichers 16 befindet sich ein erster Temperatursensor 17. Es können weitere Temperatursensoren vorgesehen sein, wie in Figur 2 dargestellt. Hierauf wird weiter unten eingegangen.

Die Wärmequelle 14 weist weiter eine Regel- und/oder Steuereinheit 15 auf, welche mit den einzelnen Komponenten der Heizungsanlage 10, wie mit dem Speicher 16 und dem ersten Temperatursensor 17, verbunden ist. In der Regel- und/oder Steuereinheit 15 befindet sich eine Recheneinheit (nicht dargestellt), beispielsweise ein Microcontroller. Bei der Verbindung handelt es sich um eine Signal- und/oder Datenverbindung 18, so dass die Komponenten der Heizungsanlage 10 und die Regel- und/oder Steuereinheit 15 miteinander kommunizieren können. Alternativ kann es sich auch um eine kabellose Verbindung handeln.

Die Regel- und/oder Steuereinheit 15 kann auch außerhalb der Wärmequelle 14 angeordnet sein.

Im Ausführungsbeispiel wird das erwärmte und gespeicherte Wasser zur Trinkwarmwasserversorgung eingesetzt. Zur Übertragung der Wärme vom Heizwasser auf das Brauchwasser ist ein Wärmetauscher 19 vorgesehen, der im Speicher 16 integriert ist und durch welchen das Heizwasser strömt. In den unteren Bereich des Speichers 16 führt eine Kaltwasserleitung 20, aus dem oberen Bereich des Speichers 16 wird über eine Leitung 22 Brauchwasser geführt.

Zum einwandfreien Betrieb der Heizungsanlage 10 können noch weitere Komponenten vorgesehen sein, wie Pumpen und Ventile, die hier nicht dargestellt werden.

Figur 2 zeigt ein weiteres Ausführungsbeispiel einer erfindungsgemäßen Heizungsanlage 10. Hier befindet sich der Wärmetauscher 19 außerhalb des Speichers 16. Unterhalb des ersten Temperatursensors 17 befindet sich ein weiterer Temperatursensor 24. Weiter weist die Heizungsanlage 10 einen Wärmeverbraucher 28 auf, welcher über einen weiteren Heizkreis 26, durch welchen Heizwasser zirkuliert, mit der Wärmequelle 14 verbunden ist. Bei dem Wärmeverbraucher 28 kann es sich beispielsweise um einen Radiator handeln, über welchen ein Raum erwärmt wird.

Es sind auch Kombinationen der in den Figuren 1 und 2 gezeigten Ausführungsbeispiele möglich. So kann die Heizungsanlage 10 nur den Heizkreis 12 und den Speicher 16 mit mehreren Temperatursensoren 17, 24 aufweisen. Oder am Speicher 16 befindet sich nur der erste Temperatursensor 17, wobei die Heizungsanlage 10 mindestens einen Wärmeverbraucher 28 aufweist.

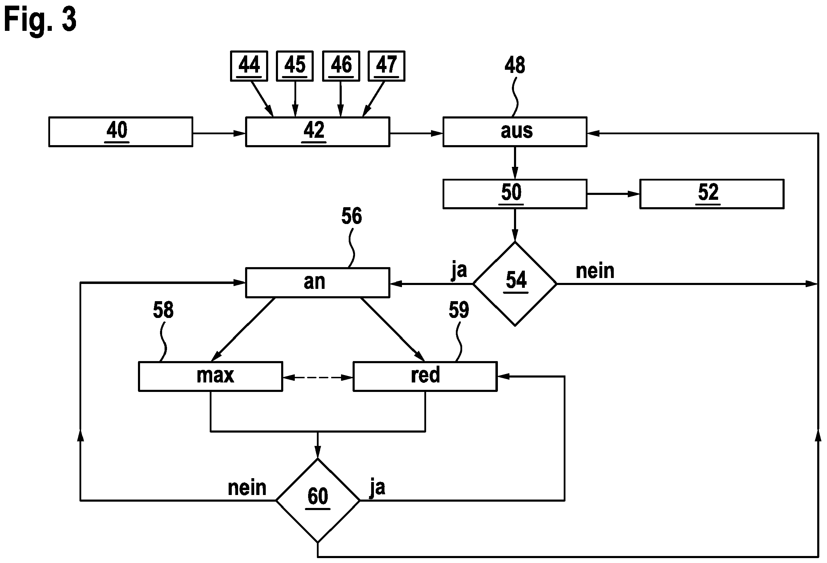

Das erfindungsgemäße Verfahren zum Erwärmen des Fluids im Speicher 16 in der Heizungsanlage 10 nach Figur 1 wird anhand Figur 3 näher erläutert, wobei zunächst davon ausgegangen wird, dass nur der erste Temperatursensor 17 vorhanden ist. Im Anschluss daran wird das Verfahren für zwei Temperatursensoren 17, 24 beschrieben.

Bevor das Verfahren mit der Berechnung der Leistung für der Wärmequelle 14 beginnt, mit welcher ein möglichst hoher Wirkungsgrad erzielt wird, wird in Schritt 40 der Wärmequellentyp eingegeben, wie beispielsweise ein Gas-Brennwertkessel, eine Wärmepumpe oder eine Solaranlage usw. Zur Erreichung eines möglichst hohen Wirkungsgrades greift das Verfahren auf Informationen zurück, die dem Wärmequellentyp zugeordnet sind, wie Maximal- und Minimalleistung, Volumenstrombereiche, Druckbereiche, Temperaturbereiche usw. Diese Informationen können manuell eingegeben werden, oder es werden Standardwerte verwendet, die in der Regel- und/oder Steuereinheit 15 gespeichert sind. Es kann auch eine Gerätenummer eingegeben werden, zu welcher die Informationen abgespeichert, beispielsweise in einer Datenbank abgelegt, sind.

Alternativ kann auch automatisch erkannt werden, um welche Wärmequelle 14 es sich handelt. Hierfür werden Informationen über die Wärmequelle 14 von der Regel- und/oder Steuereinheit 15 oder über eine andere Recheneinheit unter Verwendung der Signal- und/oder Datenverbindung 18 abgefragt. Die ermittelten Informationen werden mit in einer Datenbank hinterlegten Daten verglichen, wodurch eine Identifikation stattfindet, so dass den ermittelten Informationen eine Wärmequelle zugeordnet wird.

Das Verfahren wird dann bei Schritt 42 fortgesetzt. Hier werden Parameter eingegeben oder vorgegeben, die innerhalb des Verfahrens verwendet werden, wie ein Sollwert 44, insbesondere eine Solltemperatur, für den Speicher 16 und ein erster Schwellenwert 45. Der erste Schwellenwert 45 ist kleiner als der Sollwert 44 und gibt eine Hysterese an.

Zur Bestimmung der reduzierten Leistung der Wärmequelle 14 werden auch vorgebbare Voreinstellungen, Komforteinstellungen und/oder Prioritätseinstellungen herangezogen, die bei Bedarf in Schritt 42 eingegeben werden, beispielsweise ein Hysteresewert 46, ein Zeitwert 47 für den Übergang zwischen einem Betrieb mit maximaler und reduzierter Leistung der Wärmequelle 14 und/oder die Vorgabe, ob eine Komfortvariante oder eine bezüglich des Energieverbrauchs optimierte Variante genutzt werden soll. Weist die Heizungsanlage 10 einen Wärmeverbraucher 28 auf, so ist beispielsweise eine Prioritätseinstellung möglich, über die die Warmwasseraufbereitung Vorrang vor der Versorgung des Wärmeverbrauchers 28 mit Wärme hat, oder umgekehrt.

Alternativ können voreingestellte Eingaben verwendet werden. Auch kann automatisch erkannt werden, ob und welche Wärmeverbraucher 28 vorhanden sind, wobei diesen Standardeinstellungen zugeordnet werden können. Beispielsweise hat die Trinkwarmwasserbereitung Vorrang vor der Heizwasserbereitung für den Wärmeverbraucher 28, Energieeffizienz hat Vorrang vor Komfort usw.

Das Verfahren startet im Zustand 48: Hier wird der Speicher 16 nicht mit Wärme versorgt; die Wärmequelle 14 ist im Heizbetrieb oder ausgeschaltet.

Die Variablen zur Bestimmung der Leistung, mit welcher die Wärmequelle 14 betrieben wird, sind eine vom ersten Temperatursensor 17 gemessene erste aktuelle Temperatur 52 und/oder eine angegebene oder ermittelte Heizwasseranforderung. In Schritt 50 wird die erste aktuelle Temperatur 52 bestimmt.

In Schritt 54 wird abgefragt, ob die erste aktuelle Temperatur 52 kleiner als der erste Schwellenwert 45 ist. Falls ja, so wird das Verfahren in Schritt 56 fortgesetzt, sonst kehrt das Verfahren zu Schritt 48 zurück.

In Schritt 56 wird die Wärmequelle 14 gestartet, um das Heizwasser in dem Heizkreis 12 zu erwärmen, welches zur Erwärmung des Brauchwassers eingesetzt wird. Abhängig von den in den Schritten 40 und 42 vorgenommenen Einstellungen wird die Leistung bestimmt. Ist beispielsweise ein möglichst hoher Komfort erwünscht, wird die maximale Leistung der Wärmequelle 14 eingestellt. In diesem Fall befindet sich die Wärmequelle 14 im Zustand 56. Hat zum Beispiel Effizienz Priorität und/oder liegen keine anderen Heizwasseranforderungen vor, beispielsweise für Wärmeverbraucher 28, wird eine reduzierte Leistung vorgegeben, und die Wärmequelle 14 befindet sich im Zustand 58. Zugleich oder alternativ kann eine reduzierte Solltemperatur vorgegeben werden.

Zur Bestimmung der reduzierten Leistung können unter anderem Daten verwendet werden, die in einer Tabelle in der Steuer- und/oder Recheneinheit 15 abgespeichert sind. Die Informationen über die Wärmequelle 14 werden mit diesen Daten abgeglichen. Soll beispielsweise eine maximale Effizienz erreicht werden, so wird in dieser Tabelle gemäß der Wärmequelle 14 eine zur Effizienz passende Leistung ausgewählt. Oder es sind Kennlinien hinterlegt, die die Belastung der Wärmequelle 14 in Bezug zum Wirkungsgrad und/oder der Systemtemperatur setzen.

Dasselbe trifft zu, wenn die reduzierte Solltemperatur zusätzlich zur reduzierten Leistung oder statt der reduzierten Leistung bestimmt wird.

Beispielsweise wird die reduzierte Leistung derart bestimmt, dass sie zwischen einer vorgebbaren maximalen Leistung und einer vorgebbaren optimierten Leistung liegt. Entsprechend wird die reduzierte Solltemperatur zwischen einer vorgebbaren maximalen Solltemperatur und einer vorgebbaren optimalen Solltemperatur bestimmt. Die Beziehung zwischen der maximalen Leistung und der optimierten Leistung bzw. zwischen der maximalen Solltemperatur und der optimalen Solltemperatur ist über eine vorgebbaren oder bestimmbare Funktion gegeben, welche beispielsweise linear sein kann.

Das Brauchwasser im Speicher 16 wird so lange erwärmt, bis die erste aktuelle Temperatur 52 den ersten Schwellenwert 45 erreicht oder überschreitet. In Schritt 60 wird also abgefragt, ob die erste aktuelle Temperatur 52 größer als der erste Schwellenwert 45 ist. Zugleich wird überprüft, ob die erste aktuelle Temperatur 52 den Sollwert 44 erreicht oder überschreitet.

Ist die erste aktuelle Temperatur 52 weiterhin kleiner als der erste Schwellenwert 45, also zugleich auch kleiner als der Sollwert 44, kehrt das Verfahren zu Schritt 56 zurück. Die Wärmequelle 14 versorgt weiterhin den Speicher 16 mit Wärme. Es wird von Neuem entschieden, ob die Wärmequelle 14 mit maximaler Leistung oder reduzierter Leistung betrieben wird. Hierdurch kann also auch zwischen den Zuständen 58 und 59 ein Wechsel stattfinden, was durch eine gestrichelte Linie dargestellt wird.

Alternativ kann zum Wechseln zwischen dem Betrieb der Wärmequelle 14 mit maximaler und reduzierter Leistung ein Zeitkriterium vorgegeben sein. Dies wird über den in Schritt 42 eingegebenen Zeitwert 47 realisiert. In Schritt 60 wird dann abgefragt, ob der Zeitwert 47 erreicht ist. Falls ja, so endet die Versorgung des Speichers 16 mit Wärme, die Wärmequelle 14 kehrt in den Heizbetrieb zurück oder wird ausgeschaltet. Falls nicht, wird das Verfahren in Schritt 56 fortgesetzt.

Erreicht oder überschreitet die erste aktuelle Temperatur 52 den ersten Schwellenwert 45, jedoch nicht den Sollwert 44, so wird die Wärmequelle 14 in den Zustand 59 versetzt, also mit reduzierter Leistung betrieben. Alternativ oder zugleich kann die Wärmequelle mit reduzierter Solltemperatur betrieben werden.

Ist die erste aktuelle Temperatur 52 größer als der erste Schwellenwert 45 und der Sollwert 44, so kehrt das Verfahren zu Schritt 48 zurück, in welchem die Wärmequelle 14 in den Heizbetrieb zurückkehrt oder ausgeschaltet wird.

Falls die Wärmeabgabe aus dem Speicher 16 größer als die aktuelle Wärmezufuhr ist, so wird die Leistung der Wärmequelle 14 erhöht, um eine anhaltende Versorgung mit Warmwasser zu gewährleisten.

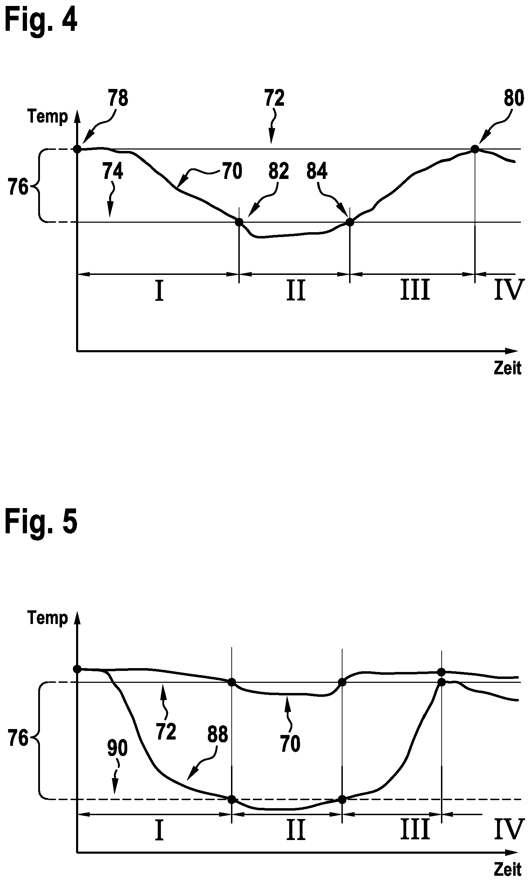

Das Verfahren für ein System mit einem Speicher 16 mit einem Temperatursensor 17 wird weiter anhand Figur 4 veranschaulicht.

Figur 4 zeigt eine Kennlinie 70 der ersten aktuellen Temperatur 52 über die Zeit. Die Linie 72 zeigt die Solltemperatur 44 für den Speicher 16 an. Die Linie 74 gibt den ersten Schwellenwert 45 an. Die Kennlinie 70 der aktuellen Temperatur 52 schneidet bzw. berührt die Linie 72 der Solltemperatur 44 in zwei Punkten 78, 80. Die Kennlinie 70 schneidet die Linie 74 ebenfalls in zwei Punkten 82, 84. Über die Schnittpunkte 78, 80, 82, 84 werden vier Bereiche I, II, III, IV definiert: von Punkt 78 zu Punkt 82 ein erster Bereich I, von Punkt 82 zu 84 ein zweiter Bereich II, von Punkt 84 zu 80 ein dritter Bereich III, ab Punkt 80 ein vierter.

Im ersten Bereich I liegt die erste aktuelle Temperatur 52 über dem ersten Schwellenwert 45, so dass keine Inbetriebnahme der Wärmequelle 14 nötig ist. Dies entspricht dem Schritt 48 in Figur 3.

Im zweiten Bereich II fällt die erste aktuelle Temperatur 52 unter die Linie 74, das heißt, sie ist kleiner als der erste Schwellenwert 45. Nun muss die Wärmequelle 14 gestartet werden, um die Warmwassertemperatur zu erhöhen. Dies entspricht dem Schritt 56 in Figur 3.

Nach einiger Zeit steigt die erste aktuelle Temperatur 52 über den ersten Schwellenwert 45 und befindet sich im dritten Bereich III. Die aktuelle Temperatur 53 ist dabei noch kleiner als der Sollwert 44. Die Wärmequelle 14 wird mit reduzierter Leistung und/oder reduzierter Solltemperatur betrieben. Dies entspricht dem Schritt 59 in Figur 3.

Der vierte Bereich IV entspricht dem ersten Bereich I. Die aktuelle Temperatur 53 erreicht oder überschreitet die Linie 72, die zum Sollwert 44 gehört. Die Wärmequelle 14 wird ausgeschaltet. Dies entspricht der Rückkehr von Schritt 60 zu Schritt 48 in Figur 3.

Das Verfahren zum Erwärmen des Fluids im Speicher 16 in der Heizungsanlage 10 nach Figur 2 wird im folgenden mit Hilfe der Figur 3 näher erläutert.

Das Verfahren läuft für diesen Fall weitestgehend analog. Wie in den Schritten 40 und 42 werden Einstellungen vorgenommen. Insbesondere wird ein zweiter Schwellenwert 87 für eine zweite aktuelle Temperatur 86 am zweiten Sensor 24 vorgegeben.

Zusätzlich zur ersten aktuellen Temperatur 52 am ersten Temperatursensor 17 wird wie im Schritt 50 die zweite aktuelle Temperatur 86 am weiteren Temperatursensor 24 gemessen.

Wie in Schritt 54 werden die gemessenen Temperaturen 52, 86 mit der vorgegebenen Solltemperatur 44 und dem ersten Schwellenwert 45 verglichen. Ist die erste aktuelle Temperatur 52 im Speicher 16 größer oder gleich der Solltemperatur 44, so kehrt das Verfahren zu Schritt 48 zurück, und die Wärmequelle 14 bleibt im Heizbetrieb oder außer Betrieb.

Ist die erste aktuelle Temperatur 52 kleiner als der erste Schwellenwert 45, wird wie in Schritt 56 die Wärmequelle 14 gestartet. Die Wärmequelle 14 wird auch gestartet, wenn die erste aktuelle Temperatur 52 kleiner als der Sollwert 44 und die zweite aktuelle Temperatur 86 kleiner als der zweite Schwellenwert 87 ist. Sie wird entweder mit reduzierter Leistung betrieben, wie in Zustand 59, oder mit maximaler Leistung, wie in Zustand 53. Hierfür werden auch die in den Schritten 40 und 42 vorgenommenen Einstellungen herangezogen.

Wie in Schritt 60 wird dann abgefragt, ob die erste aktuelle Temperatur 52 größer oder kleiner als der erste Sollwert 45 ist und ob die zweite aktuelle Temperatur 86 größer oder kleiner als der zweite Schwellenwert 87 ist. Zugleich wird überprüft, ob die zweite aktuelle Temperatur 86 den Sollwert 44 erreicht oder überschreitet.

Falls die erste und zweite aktuelle Temperatur 52, 86 den Sollwert 44 erreichen oder überschreiten, so wird das Verfahren in Schritt 48 fortgesetzt, und die Wärmequelle 14 befindet sich im Heizbetrieb oder wird abgeschaltet.

Falls die erste aktuelle Temperatur 52 den ersten Schwellenwert 45 oder den Sollwert 44 erreicht oder überschreitet und die zweite aktuelle Temperatur 86 unter dem zweiten Schwellenwert 87 liegt, so wird das Verfahren in Schritt 56 fortgesetzt. Es wird neu entschieden, ob die Wärmequelle 14 mit maximaler oder reduzierter Leistung betrieben wird.

Liegt die zweite aktuelle Temperatur 86 über dem zweite Schwellenwert 87, wird die Wärmequelle 14 mit reduzierter Leistung betrieben (Zustand 59), bis die zweite aktuelle Temperatur 86 den Sollwert 44 erreicht oder überschreitet, so dass das Verfahren wieder in Schritt 48 wechselt.

Alternativ kann wie in Schritt 60 ein Zeitkriterium überprüft werden, nach welchem die Wärmequelle 14 ausgeschaltet wird, wenn der Zeitwert 47 erreicht oder überschritten wird.

Das Verfahren wird weiter an Figur 5 veranschaulicht.

Wie in Figur 4 gibt die Kennlinie 70 den Verlauf der ersten aktuellen Temperatur 52 am oberen ersten Temperatursensor 17 an und die Kennlinie 88 den Verlauf der zweiten aktuellen Temperatur 86 am weiteren Temperatursensor 24. Die Linie 72 gibt die Solltemperatur 44 an, und die Linie 90 den zweiten Schwellenwert 87 für die zweite aktuelle Temperatur 86 am weiteren Temperatursensor 24.

Die Schritte 48 und 56 und die Zustände 58 und 59 sind wieder durch die Bereiche I bis IV wiedergespiegelt. Im ersten Bereich I ist die erste aktuelle Temperatur 52 größer als die Solltemperatur 44, die weitere zweite aktuelle Temperatur 86 liegt über der Linie 90. Wie in Schritt 48 wird der Speicher 16 nicht mit Wärme versorgt.

Im zweiten Bereich II ist die erste aktuelle Temperatur 52 kleiner als die Solltemperatur 44, die zweite aktuelle Temperatur 86 liegt unter der Linie 90. Die Wärmequelle 14 wird mit maximaler oder reduzierter Leistung betrieben. Möchte man beispielsweise mehr Komfort, so würde die maximale Leistung gewählt werden. Befindet sich die Wärmequelle 14 beispielsweise im Nachtbetrieb, würde die reduzierte Leistung eingestellt werden.

Im Anschluss daran verlaufen die Kennlinien 70 und 88 im dritten Bereich, wo die erste aktuelle Temperatur 52 größer als die Solltemperatur 44 ist und die zweite aktuelle Temperatur 86 über der Linie 90 liegt. Hier wird die Wärmequelle 14 mit reduzierter Leistung betrieben. Alternativ, falls Komfort Priorität hat, kann eine maximale Leistung eingestellt werden. Wie oben bereits ausgeführt, kann zwischen den verschiedenen Leistungen nach Bedarf, automatisch oder manuell, gewechselt werden.

Der vierte Bereich IV entspricht wieder dem ersten Bereich I usw.

Auch die Heizungsanlage 10 nach Figur 2 kann mit dem erfindungsgemäßen Verfahren betrieben werden. Dabei läuft das Verfahren analog wie oben beschrieben im Falle eines oder mehrerer Temperatursensoren 17, 24, wobei nun eine Erwärmung des Heizwassers für den Wärmeverbraucher 28 beachtet wird. Beispielsweise kann wie in Schritt 42 vorgegeben werden, dass die Heizwasseraufbereitung zum Heizen Vorrang vor der Trinkwassererwärmung hat. Weiter kann die Wärmequelle 14 automatisch mit reduzierter Leistung werden, beispielsweise wenn keine oder geringe Heizwasseranforderungen vorliegen oder falls sich die Wärmequelle 14 im Nachtbetrieb befindet. Beispielsweise kann dies, gemäß Figuren 4 und 5, jeweils in den Bereichen II der Fall sein. Hier wird dann die Wärmequelle 14 mit reduzierter Leistung betrieben. Würde eine Heizwasseranforderung für den Heizbetrieb vorliegen, so würde im Bereich II die maximale Leistung gewählt werden und im Bereich III die reduzierte, so dass die Wärmequelle 14 mit möglichst hoher Effizienz unter Beachtung des Komforts betrieben wird.

In Schritt 42 kann bei Bedarf ein Hysteresewert 46 eingegeben werden, welcher zur Berechnung des ersten Schwellenwertes 45 und/oder des zweiten Schwellenwertes 87 verwendet wird. Der Schwellenwert 45, 87 wird dann berechnet gemäß der Differenz T_{Schwelle} = Tₛₒₗₗ - dT*f, wobei T_{Schwelle} der erste oder der zweite Schwellenwert 45, 87 ist, Tₛₒₗₗ der Sollwert 44, dT der Hysteresewert 46 und f ein Komfortfaktor, der größer als 0 ist. Der Komfortfaktor f dient zu Komfortzwecken. Über diesen kann bestimmt werden, ob das Brauchwasser früher oder später erwärmt werden soll. Das heißt, über den Komfortfaktor wird der erste Schwellenwert 45 vergrößert oder verkleinert. Auch kann über den Komfortfaktor angegeben werden, welcher Anteil der gesamten zu erwärmenden Wassermenge in einem energieoptimierten Leistungsbereich und welcher Anteil mit maximaler Leistung, also möglichst schnell ohne Beachtung der Energieeffizienz, erwärmt werden soll. In diesem Fall liegt der Komfortfaktor zwischen 0 und 1.

Beispielsweise kann ein Hysteresewert 46 von 5 Grad Celsius vorgegeben sein, wobei eine Solltemperatur 44 von 50 Grad Celsius festgelegt wurde. Üblicherweise wird f=1 gewählt, so dass der erste Schwellenwert 45 bei 45 Grad Celsius liegt. Ist die erste aktuelle Temperatur 52 größer als 45 Grad Celsius, so findet keine Erwärmung des Wassers statt; fällt sie unter 45 Grad Celsius, wird die Wärmequelle 14 in Betrieb genommen. Nun kann ein Komfortfaktor f gewählt werden, der kleiner als 1 ist, zum Beispiel 0,5. Es ergibt sich ein Hysteresebereich von 50 bis 47,5 Grad Celsius, das heißt, die Wärmequelle 14 wird bereits in Betrieb genommen, wenn die erste aktuelle Temperatur 52 unter 47,5 Grad Celsius fällt. Oder der Komfortfaktor wird größer 1 gewählt, dann findet die Erwärmung des Brauchwassers später statt.

## Patentansprüche

1. Verfahren zum Erwärmen eines Fluids in einem Speicher (16), insbesondere von Brauchwasser, in einer Heizungsanlage (10), aufweisend mindestens eine Wärmequelle (14) zum Übertragen von Wärmeenergie auf das Fluid, wobei die Wärmequelle zumindest zeitweise mit reduzierter Leistung und/oder reduzierter Solltemperatur betrieben wird, so dass das Fluid im Speicher (16) in einem effizienten Leistungsbereich erwärmt wird, und wobei ein erster Sensor (17), insbesondere ein erster Temperatursensor, im Speicher (16) angeordnet ist, **dadurch gekennzeichnet, dass** das Fluid im Speicher (16) mit maximaler Leistung erwärmt wird, falls der vom ersten Sensor (17) gemessene erste Wert (52) einen vorgebbaren ersten Schwellenwert (45) unterschreitet, und dass anschließend das Fluid im Speicher (16) mit reduzierter Leistung und/oder reduzierter Solltemperatur im effizienten Leistungsbereich erwärmt wird, falls der erste Wert (52) am ersten Sensor (17) den ersten Schwellenwert (45) erreicht oder überschreitet, bis der erste Wert (52) einen vorgebbaren Sollwert (44) erreicht oder überschreitet.

2. Verfahren nach Anspruch, **dadurch gekennzeichnet, dass** ein erster Sensor (17), insbesondere ein erster Temperatursensor, im Speicher (16) angeordnet ist, dessen Signal zur Initiierung der reduzierten Leistung herangezogen wird.

3. Verfahren nach Anspruch 2, **dadurch gekennzeichnet, dass** die Wärmequelle mit reduzierter Leistung und/oder mit reduzierter Solltemperatur betrieben wird, falls ein vom ersten Sensor (17) gemessener erster Wert (52) einen vorgebbaren Sollwert (44), insbesondere eine Sollwerttemperatur, unterschreitet.

4. Verfahren nach einem der Ansprüche 1 bis 3, **dadurch gekennzeichnet, dass** zur Bestimmung der reduzierten Leistung und/oder der reduzierten Solltemperatur der Wärmequelle (14) vorgebbare Voreinstellungen, Komforteinstellungen und/oder Prioritätseinstellungen herangezogen werden.

5. Verfahren nach einem der Ansprüche 2 bis 4, **dadurch gekennzeichnet, dass** der Speicher (16) mindestens einen zweiten Sensor (24), insbesondere einen Temperatursensor, aufweist, welcher unterhalb des ersten Sensors (17) angeordnet ist und zur Initiierung der reduzierten Leistung herangezogen wird.

6. Verfahren nach Anspruch 5, **dadurch gekennzeichnet, dass** das Fluid im Speicher (16) im effizienten Leistungsbereich erwärmt wird, falls ein vom zweiten Sensor (24) gemessener zweiter Wert (86) den Sollwert (44) unterschreitet.

7. Verfahren nach Anspruch 5 oder 6, **dadurch gekennzeichnet, dass** das Fluid im Speicher (16) mit maximaler Leistung erwärmt wird, falls der erste Wert (52) am ersten Sensor (17) den Sollwert (44) unterschreitet, und dass anschließend das Fluid im Speicher (16) im effizienten Leistungsbereich erwärmt wird, falls der erste Wert (52) am ersten Sensor (17) den Sollwert (44) erreicht oder überschreitet und/oder der zweite Wert (86) am zweiten Sensor (24) einen vorgebbaren zweiten Schwellenwert (87) erreicht oder überschreitet, bis der zweite Wert (86) am zweiten Sensor (24) den Sollwert (44) erreicht oder überschreitet.

8. Verfahren nach einem der Ansprüche 4 bis 7, **dadurch gekennzeichnet, dass** der erste und/oder der zweite Schwellenwert (45, 87) gemäß der Formel T_{Schwelle} = Tₛₒₗₗ - dT*f berechnet wird, wobei T_{Schwelle} der erste oder der zweite Schwellenwert (45, 87) ist, Tₛₒₗₗ der Sollwert (44), dT ein Hysteresewert (46) und f ein Komfortfaktor, der größer als 0 ist.

9. Verfahren nach einem der vorhergehenden Ansprüche, **dadurch gekennzeichnet, dass** durch die Wärmequelle (14) Wärme auf Heizwasser übertragen wird, mit welchem Brauchwasser im Speicher (16) erwärmt wird, wobei die Wärmequelle (14) mit reduzierter Leistung und/oder reduzierter Solltemperatur betrieben wird, wenn keine oder geringe Heizwasseranforderungen für einen Heizbetrieb vorliegen.

10. Heizungsanlage, aufweisend mindestens eine Wärmequelle (14) zum Übertragen von Wärmeenergie auf ein Fluid und mindestens einen Speicher (16) zum Speichern des Fluids, sowie eine Regel- und/oder Steuereinheit, **dadurch gekennzeichnet, dass** die Regel- und/oder Steuereinheit (15) konfiguriert ist, in der Heizungsanlage ein Verfahren zum Erwärmen eines Fluids in dem Speicher (16) nach einem der Ansprüche 1 bis 9 auszuführen.

## Claims

1. Method for heating a fluid in a store (16), in particular service water, in a heating installation (10) having at least one heat source (14) for transferring heat energy to the fluid, wherein, at least intermittently, the heat source is operated at reduced power and/or reduced target temperature such that the fluid in the store (16) is heated in an efficient power range, and wherein a first sensor (17), in particular a first temperature sensor, is arranged in the store (16), **characterized in that**, if the first value (52), measured by the first sensor (17), falls below a predefinable first threshold value (45), the fluid in the store (16) is heated at maximum power, and **in that**, subsequently, if the first value (52) at the first sensor (17) reaches or exceeds the first threshold value (45), the fluid in the store (16) is heated at reduced power and/or reduced target temperature in the efficient power range until the first value (52) reaches or exceeds a predefinable target value (44) .

2. Method according to Claim 1, **characterized in that** a first sensor (17), in particular a first temperature sensor, is arranged in the store (16), the signal of which sensor is used for initiating the reduced power.

3. Method according to Claim 2, **characterized in that**, if a first value (52), measured by the first sensor (17), falls below a predefinable target value (44), in particular a target value temperature, the heat source is operated at reduced power and/or at reduced target temperature.

4. Method according to one of Claims 1 to 3, **characterized in that** predefinable presettings, comfort settings and/or priority settings are used for determining the reduced power and/or the reduced target temperature of the heat source (14).

5. Method according to one of Claims 2 to 4, **characterized in that** the store (16) has at least one second sensor (24), in particular a temperature sensor, which is arranged below the first sensor (17) and which is used for initiating the reduced power.

6. Method according to Claim 5, **characterized in that**, if a second value (86), measured by the second sensor (24), falls below the target value (44), the fluid in the store (16) is heated in the efficient power range.

7. Method according to Claim 5 or 6, **characterized in that**, if the first value (52) at the first sensor (17) falls below the target value (44), the fluid in the store (16) is heated at maximum power, and **in that**, subsequently, if the first value (52) at the first sensor (17) reaches or exceeds the target value (44) and/or the second value (86) at the second sensor (24) reaches or exceeds a predefinable second threshold value (87), the fluid in the store (16) is heated in the efficient power range until the second value (86) at the second sensor (24) reaches or exceeds the target value (44).

8. Method according to one of Claims 4 to 7, **characterized in that** the first and/or the second threshold value (45, 87) are/is calculated according to the formula T_{threshold} = T_{target} - dT*f, where T_{threshold} is the first or the second threshold value (45, 87), T_{target} is the target value (44), dT is a hysteresis value (46) and f is a comfort factor, which is greater than 0.

9. Method according to one of the preceding claims, **characterized in that** heat is transferred to heating water by the heat source (14), by which heating water service water in the store (16) is heated, wherein, if no or low heating requirements for heating operation are present, the heat source (14) is operated at reduced power and/or reduced target temperature.

10. Heating installation having at least one heat source (14) for transferring heat energy to a fluid, and having at least one store (16) for storing the fluid, and also having a regulating and/or control unit, **characterized in that** the regulating and/or control unit (15) is configured to carry out in the heating installation a method for heating a fluid in the store (16) according to one of Claims 1 to 9.

## Revendications

1. Procédé pour chauffer un fluide dans un réservoir (16), en particulier de l'eau domestique, dans une installation de chauffage (10), comportant au moins une source de chaleur (14) destinée à transférer de l'énergie thermique au fluide, dans lequel la source de chaleur est mise en fonctionnement au moins temporairement avec une puissance réduite et/ou avec une température de consigne réduite, de manière à ce que le fluide contenu dans le réservoir (16) soit chauffé dans une plage de puissance efficace, et dans lequel un premier capteur (17), en particulier un premier capteur de température, est disposé dans le réservoir (16),
**caractérisé en ce que** le fluide contenu dans le réservoir (16) est chauffé avec une puissance maximale dans le cas où la première valeur (52) mesurée par le premier capteur (17) s'abaisse en-dessous d'une première valeur de seuil (45) pouvant être prédéfinie, et **en ce que** le fluide contenu dans le réservoir (16) est ensuite chauffé avec une puissance réduite et/ou avec une température de consigne réduite dans la plage de puissance efficace dans le cas où la première valeur (52) du premier capteur (17) atteint ou dépasse la première valeur de seuil (45), jusqu'à ce que la première valeur (52) atteigne ou dépasse une valeur de consigne (44) pouvant être prédéfinie.

2. Procédé selon la revendication 1, **caractérisé en ce qu'**un premier capteur (17), en particulier un premier capteur de température, dont le signal est utilisé pour initialiser la puissance réduite, est disposé dans le réservoir (16).

3. Procédé selon la revendication 2, **caractérisé en ce que** la source de chaleur fonctionne avec une puissance réduite et/ou avec une température de consigne réduite dans le cas où une première valeur (52) mesurée par le premier capteur (17) s'abaisse en dessous d'une valeur de consigne (44) pouvant être prédéfinie, notamment d'une température de consigne.

4. Procédé selon l'une des revendications 1 à 3, **caractérisé en ce que** des préréglages prédéfinis, des réglages de confort et/ou des réglages de priorité sont utilisés pour déterminer la puissance réduite et/ou la température de consigne réduite de la source de chaleur (14) .

5. Procédé selon l'une des revendications 2 à 4, **caractérisé en ce que** le réservoir (16) comporte au moins un deuxième capteur (24), en particulier un capteur de température, qui est disposé en-dessous du premier capteur (17) et est utilisé pour déclencher la réduction de puissance.

6. Procédé selon la revendication 5, **caractérisé en ce que** le fluide contenu dans le réservoir (16) est chauffé dans la plage de puissance efficace dans le cas où une deuxième valeur (86) mesurée par le deuxième capteur (24) s'abaisse en-dessous de la valeur de consigne (44).

7. Procédé selon la revendication 5 ou 6, **caractérisé en ce que** le fluide contenu dans le réservoir (16) est chauffé avec une puissance maximale dans le cas où la première valeur (52) du premier capteur (17) s'abaisse en-dessous de la valeur de consigne (44), et **en ce que** le fluide contenu dans le réservoir (16) est ensuite chauffé dans la plage de puissance efficace dans le cas où la première valeur (52) du premier capteur (17) atteint ou dépasse la valeur de consigne (44) et/ou dans le cas où la deuxième valeur (86) du deuxième capteur (24) atteint ou dépasse une deuxième valeur de seuil (87) pouvant être prédéfinie, jusqu'à ce que la deuxième valeur (86) du deuxième capteur (24) atteigne ou dépasse la valeur de consigne (44).

8. Procédé selon l'une des revendications 4 à 7, **caractérisé en ce que** la première et/ou la deuxième valeur de seuil (45, 87) est calculée selon la formule Tₛₑᵤᵢₗ = T_{consigne} - dT*f, où Tₛₑᵤᵢₗ est la première ou la deuxième valeur de seuil (45, 87), T_{consigne} est la valeur de consigne (44), dT est une valeur d'hystérésis (46) et f est un facteur de confort fin qui est supérieur à 0.

9. Procédé selon l'une des revendications précédentes, **caractérisé en ce que** de la chaleur est transférée à de l'eau de chauffage par la source de chaleur (14), cela permettant de chauffer l'eau domestique contenue dans le réservoir (16), dans lequel la source de chaleur (14) est mise en fonctionnement avec une puissance réduite et/ou avec une température de consigne réduite lorsque les besoins en eau de chauffage sont nuls ou faibles pour une opération de chauffage.

10. Système de chauffage, comprenant au moins une source de chaleur (14) permettant de transférer de l'énergie thermique à un fluide et au moins un réservoir (16) permettant de stocker le fluide, ainsi qu'une unité de régulation et/ou de commande,
**caractérisé en ce que** l'unité de commande et/ou de régulation (15) est configurée pour mettre en oeuvre dans le système de chauffage un procédé de chauffage d'un fluide dans le réservoir (16) selon l'une des revendications 1 à 9.
